# EUROPEAN PATENT APPLICATION

(11) **EP 3 926 378 A2**
(43) Date of publication of application: **22.12.2021**
(21) Application number: 21176386.7
(22) Date of filing: 27.05.2021
(51) Int. Cl.: G02B 7/00, G02B 25/00, G02B 27/00, G02C 11/08

(54) **LOUPE HAVING ENHANCED SHIELDING**

(30) Priority: 27.05.2020 US 202063030868 P
(71) Applicant: Kerr Corporation, Brea CA 92822 (US)
(72) Inventor: Van Orsow, Alex, Brea, 92822 (US); Stukas, Kaylee, Brea, 92822 (US); Janardhanam, Ramesh, Brea, 92822 (US); Leiterman, Tom, Brea, 92822 (US)
(74) Representative: Pure Ideas Limited

(57) **Abstract**

A loupe assembly that provides enhanced protection against the transmission of infectious diseases from a patient to a dental professional. In various embodiments, the loupe further inhibits the transparencies of the eyewear frame from fogging by providing a humidity sponge on the transparencies or in close proximity thereto.

## Description

### Cross-Reference to Related Applications

This application claims priority to U.S. Provisional Patent Application No. 63/030,868, filed May 27, 2020 and entitled "LOUPE HAVING ENHANCED SHIELDING," which is incorporated by reference herein in its entirety as if fully set forth herein.

### Technical Field

The disclosed technology relates generally to loupes, and more particularly, some embodiments relate to loupe assemblies comprising an eye shield coupled to an eyewear frame.

### Description of the Related Art

Dental loupes aid dentists, hygienists, and dental therapists in their diagnosis and treatment of oral conditions by magnifying the features of a patient's teeth and gums. While assisting dental professionals with distinguishing the various features of a patient's teeth and gums, current loupes have provided limited to no protection against the transmission of infectious diseases from the patient to the professional. Embodiments of the disclosed technology address this need and provide other advantages.

### Brief Summary of Embodiments

According to various embodiments of the disclosed technology, there is disclosed a loupe assembly that provides enhanced protection against the transmission of infectious diseases from a patient to a dental professional. In various embodiments, the loupe further inhibits the transparencies of the eyewear frame from fogging by providing a humidity sponge on the transparencies or in close proximity thereto.

According to an embodiment of the disclosed technology, there is disclosed a loupe assembly comprising an eyewear frame, a pair of transparencies disposed within the eyewear frame, a pair of magnification lenses, and an eye shield coupled to the eyewear frame. Each of the pair of magnification lenses is associated with one of the pair of transparencies. In various embodiments, each of the pair of magnification lenses can be incorporated within or mounted upon one of the pair of transparencies.

The loupe assembly can further comprise a humidity sponge removably disposed on one or both of the pair of transparencies. In one embodiment, the humidity sponge comprises a desiccant and extends around a circumference of one or both of the pair of transparencies. In other embodiments, the humidity sponge is removably disposed on one or both of the pair of transparencies at locations other than around the circumferences of the pair of transparencies. In a specific embodiment, the desiccant is silica. The humidity sponge can be medical-grade synthetic sponge or made of cellulose or another natural material.

In a particular embodiment, the humidity sponge comprises a first transparency portion removably disposed on one of the pair of transparencies and a second transparency portion removably disposed on the other one of the pair of transparencies. The humidity sponge can further comprise a bridge portion connecting the first transparency portion and the second transparency portion. In other embodiments, the first transparency portion and the second transparency portion are separate.

In another embodiment, the humidity sponge is removably disposed on or around one or both of the pair of magnification lenses. In a particular embodiment, the humidity sponge is configured as one or a pair of circular sponges extending around a circumference of one or both of the pair of magnification lenses, either on a housing for one or both of the pair of magnification lenses, or on a portion of the pair of transparencies surrounding one or both of the pair of magnification lenses.

The eye shield can have a front edge and a rear edge, and be permanently or removably coupled to the eyewear frame at the front edge. The rear edge can be contoured to seal against a wearer's face.

In one embodiment, the eye shield comprises a top shield, a pair of side shields extending downwardly from the top shield, a pair of bottom shields, and a nose shield connecting the pair of bottom shields. Each of the pair of bottom shields extends inwardly from one of the pair of side shields.

In a particular embodiment, the eyewear frame further comprises a pair of rims and a pair of temple arms. Each of the pair of temple arms extends from one of the pair of rims. The top shield comprises a pair of extensions. Each of the pair of extensions extends along a portion of one of the pair of temple arms.

In another embodiment, the eyewear frame has a front portion comprising a bridge and a pair of rims coupled to the bridge. The eye shield surrounds the front portion of the eyewear frame.

In further embodiment, the eye shield comprises a top shield, a pair of side shields, a pair of bottom shields, and a nose shield. The top shield is coupled to the bridge and to an upper portion of the pair of rims. The pair of side shields is coupled to outer side portions of the pair of rims. The pair of bottom shields is coupled to lower portions of the pair of rims. The nose shield is coupled to inner side portions of the pair of rims.

In yet a further embodiment, the eye shield comprises a top shield and a bottom shield. The top shield is coupled to the bridge and to an upper portion of the pair of rims. The bottom shield extends from one side of the top shield, around a lower portion of the pair of rims, and to an opposite side of the top shield.

The loupe assembly can further comprise a headlamp mount coupled to the eyewear frame. In one embodiment, the eye shield has an aperture. The headlamp mount extends through the aperture in the eye shield.

According to another embodiment of the disclosed technology, there is disclosed a loupe assembly comprising an eyewear frame, a pair of transparencies disposed within the eyewear frame, a pair of magnification lenses, an eye shield coupled to the eyewear frame, and a humidity sponge removably disposed on both of the pair of transparencies. Each of the pair of magnification lenses is incorporated within one of the pair of transparencies. The humidity sponge comprises a first transparency portion, a second transparency portion, and a bridge portion. The first transparency portion is removably disposed on and extends around a circumference of one of the pair of transparencies. The second transparency portion is removably disposed on and extends around a circumference of the other one of the pair of transparencies. The bridge portion connects the first transparency portion and the second transparency portion.

In one embodiment, the eyewear frame further comprises a pair of temple arms. Each of the pair of temple arms extends from one of the pair of rims. The eye shield comprises a top shield, a bottom shield, and a pair of extensions. The top shield is coupled to the bridge and to an upper portion of the pair of rims. The bottom shield extends from one side of the top shield, around a lower portion of the pair of rims, to an opposite side of the top shield. Each of the pair of extensions extends from the top shield along a portion of one of the pair of temple arms.

According to another embodiment of the disclosed technology, there is disclosed a method of absorbing moisture within a loupe assembly, the loupe assembly comprising an eyewear frame, a pair of transparencies disposed within the eyewear frame, a pair of magnification lenses, and an eye shield coupled to the eyewear frame. The method comprises adhering a first humidity sponge comprising a desiccant to one or both of the pair of transparencies, absorbing moisture within the loupe assembly using the first humidity sponge while the loupe assembly is being worn, removing the first humidity sponge from the pair of transparencies after a period of use, and adhering a second humidity sponge to one or both of the pair of transparencies.

Other features and aspects of the disclosed technology will become apparent from the following detailed description, taken in conjunction with the accompanying drawings, which illustrate, by way of example, embodiments of the disclosed technology. The summary is not intended to limit the scope of the inventions described herein.

### Brief Description of the Drawings

The technology disclosed herein, in accordance with one or more various embodiments, is described in detail with reference to the following figures. The drawings are provided for purposes of illustration only and merely depict typical or example embodiments of the disclosed technology. These drawings are provided to facilitate the reader's understanding of the disclosed technology and shall not be considered limiting of the breadth, scope, or applicability thereof. For clarity and ease of illustration, these drawings are not necessarily made to scale.
Figure 1 is a front perspective view of a loupe assembly that provides enhanced protection against the transmission of infectious diseases from a patient to a dental professional, in accordance with one embodiment of the technology described herein.
Figure 2 is a rear elevational view of the loupe assembly of Figure 1.
Figure 3 is a close-up rear perspective view of the loupe assembly of Figure 2, showing details of the eye shield in accordance with one embodiment of the technology described herein.
Figure 4 is a front perspective view of the loupe assembly of Figure 1 placed above a face mask to provide further enhanced protection against the transmission of infectious diseases from the patient to the dental professional.
Figure 5 is a front perspective view of the loupe assembly of Figure 1 placed on the face of a wearer.
Figure 6 is a left-side elevational view of the loupe assembly of Figure 1 placed on the face of a wearer.
Figure 7 is a top plan view of the loupe assembly of Figure 1 placed on the face of a wearer.
Figure 8 is a front perspective view of a loupe assembly further comprising a humidity sponge, in accordance with one embodiment of the technology described herein.
Figure 9 is a rear perspective view of the loupe assembly of Figure 8.
Figure 10 is a rear elevational view of the loupe assembly of Figure 8.
Figure 11 is a rear perspective view of a loupe assembly further comprising a pair of humidity sponges, in accordance with one embodiment of the technology described herein.
Figure 12 is a rear elevational view of the loupe assembly of Figure 11.
Figure 13 is a top-front perspective view of a loupe assembly in accordance with another embodiment of the technology described herein.
Figure 14 is a bottom-front perspective view of the loupe assembly of Figure 13.
Figure 15 is a flow chart showing a method of absorbing moisture within a loupe assembly, in accordance with one embodiment of the technology described herein.

The figures are not exhaustive and do not limit the disclosure or the disclosed embodiments to the precise form disclosed.

### Detailed Description of the Embodiments

Embodiments of the technology disclosed herein are directed toward loupe assemblies and methods for absorbing moisture within a loupe assembly. More particularly, various embodiments of the technology disclosed herein relate to loupe assemblies comprising an eye shield coupled to an eyewear frame.

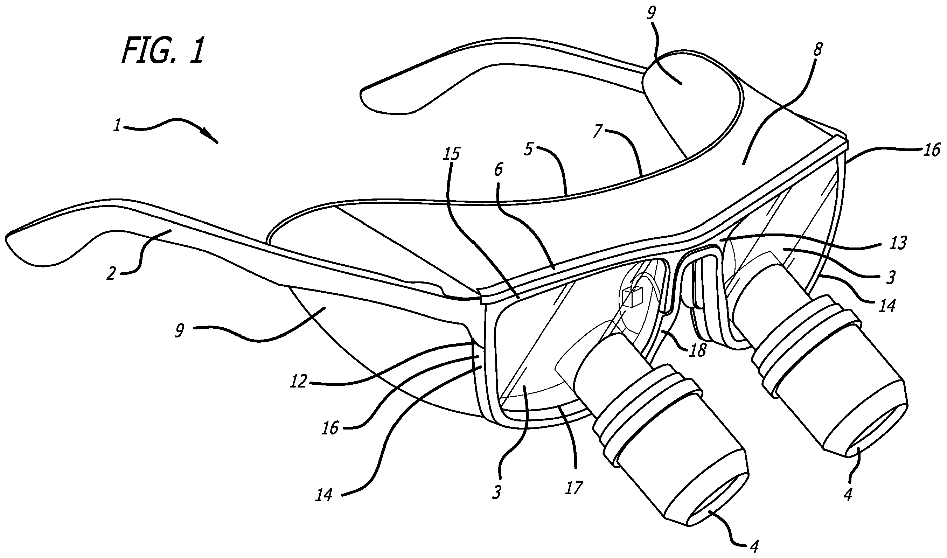

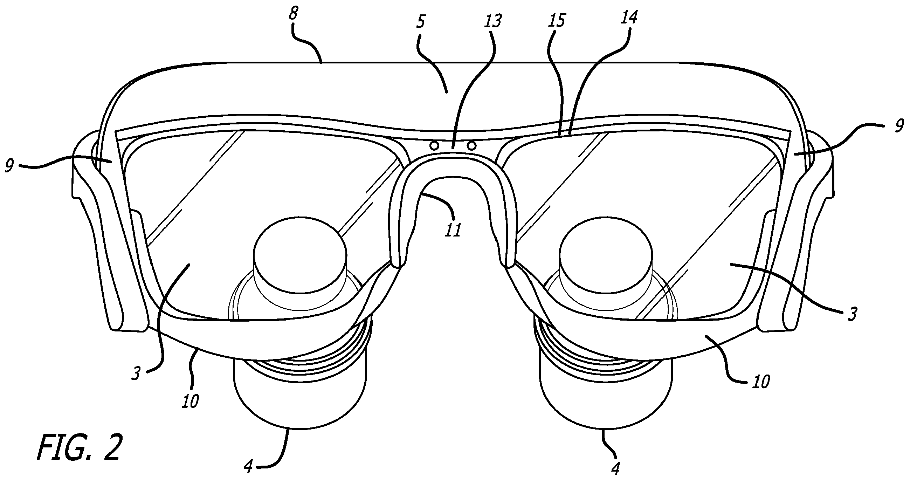

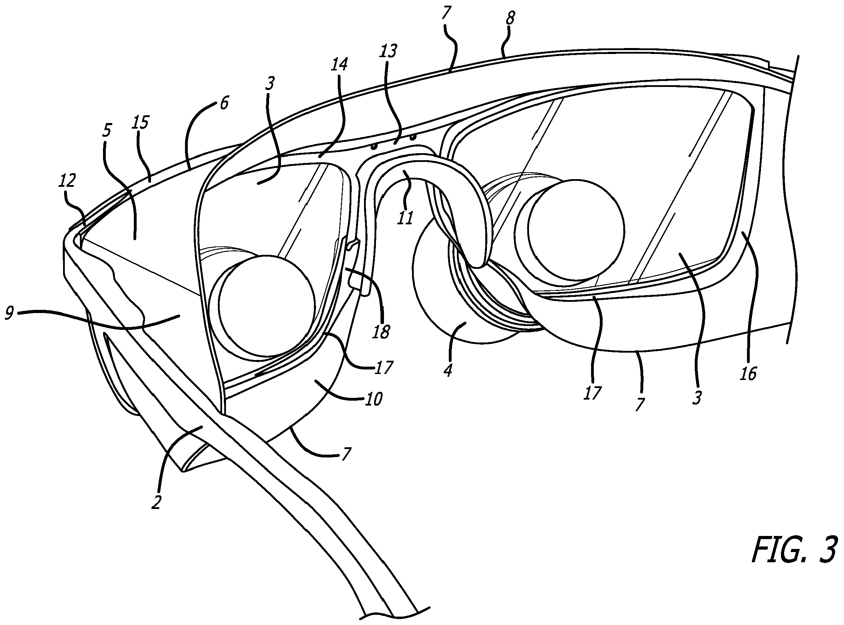

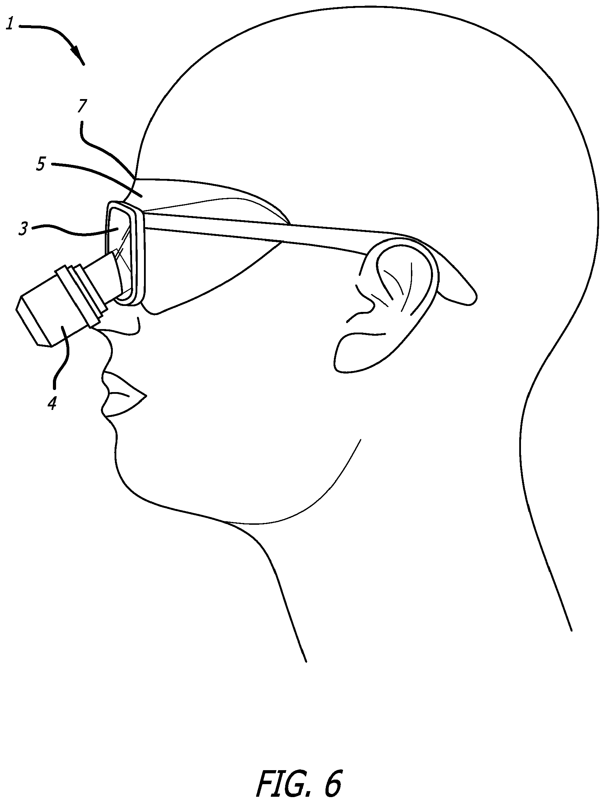

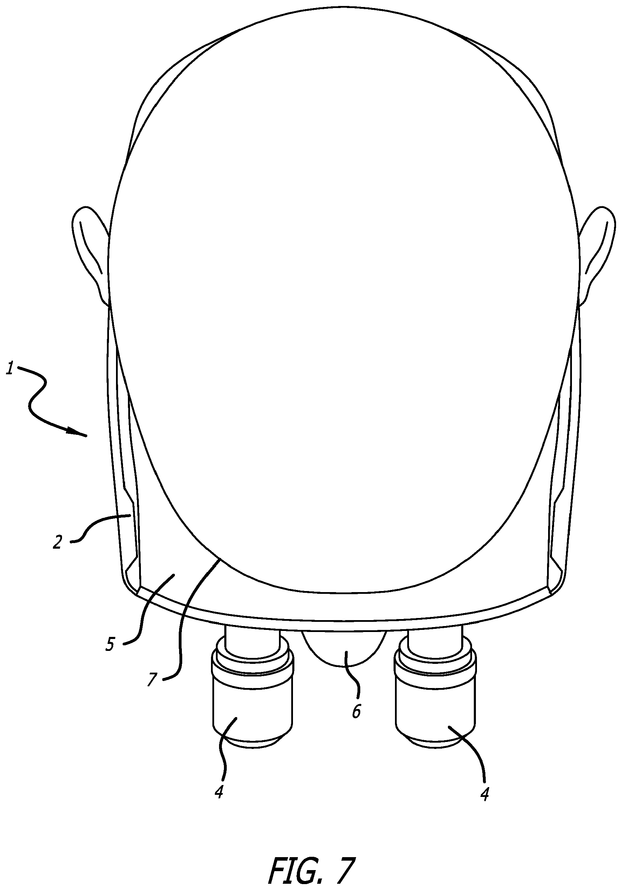

With reference now to the drawings, and in particular to Figures 1-3 thereof, there is shown an embodiment of a loupe assembly 1 that provides enhanced protection against the transmission of infectious diseases from a patient to a dental professional. The loupe assembly 1 comprises an eyewear frame 2, a pair of transparencies 3 disposed within the eyewear frame 2, a pair of magnification lenses 4, and an eye shield 5 coupled to the eyewear frame 2. Each of the pair of magnification lenses 4 is associated with one of the pair of transparencies 3. As shown in the embodiment of Figures 1-7, each of the pair of magnification lenses 4 is incorporated within one of the pair of transparencies 3. In other embodiments, each of the pair of magnification lenses 4 can be mounted upon a front surface of one of the pair of transparencies 3.

The eyewear frame 2 has a front portion 12 comprising a bridge 13 and a pair of rims 14 coupled to the bridge 13. The eye shield 5 surrounds the front portion 12 of the eyewear frame 2.

The eye shield 5 has a front edge 6 and a rear edge 7, and is coupled to the eyewear frame 2 at the front edge 6. The eye shield 5 can be permanently or removably coupled to the eyewear frame 2. The rear edge 7 is contoured to seal against a wearer's face.

More particularly, the eye shield 5 comprises a top shield 8, a pair of side shields 9 extending downwardly from the top shield 8, a pair of bottom shields 10, and a nose shield 11 connecting the pair of bottom shields 10. Each of the pair of bottom shields 10 extends inwardly from one of the pair of side shields 9. The top shield 8 is coupled to the bridge 13 and to an upper portion 15 of the pair of rims 14. The pair of side shields 9 is coupled to outer side portions 16 of the pair of rims 14. The pair of bottom shields 10 is coupled to lower portions 17 of the pair of rims 14. The nose shield 11 is coupled to inner side portions 18 of the pair of rims 14.

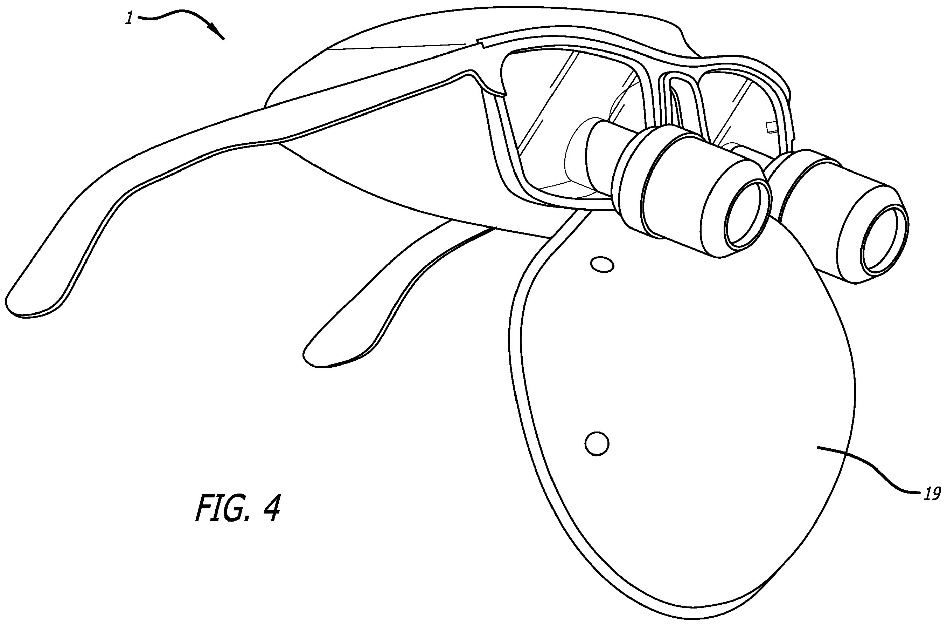

Referring to Figure 4, there is shown the loupe assembly 1 placed above a face mask 19 to provide further enhanced protection against the transmission of infectious diseases from the patient to the dental professional.

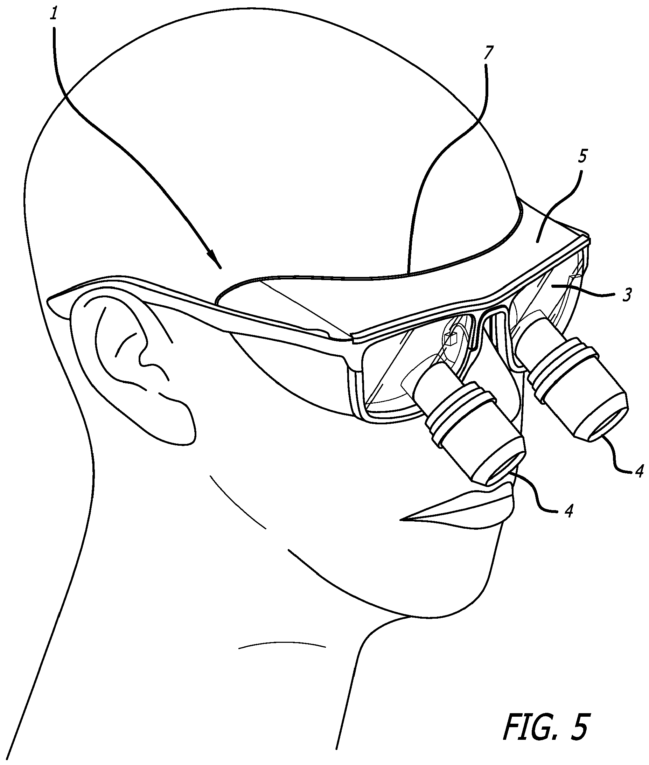

Referring to Figures 5-7, there is shown the loupe assembly 1 placed on the face of a wearer, showing the rear edge 7 of the eye shield 5 sealing against the wearer's face.

In various embodiments, the loupe 1 further inhibits the transparencies 3 of the eyewear frame 2 from fogging through the placement of a humidity sponge on the transparencies 3 or in close proximity thereto.

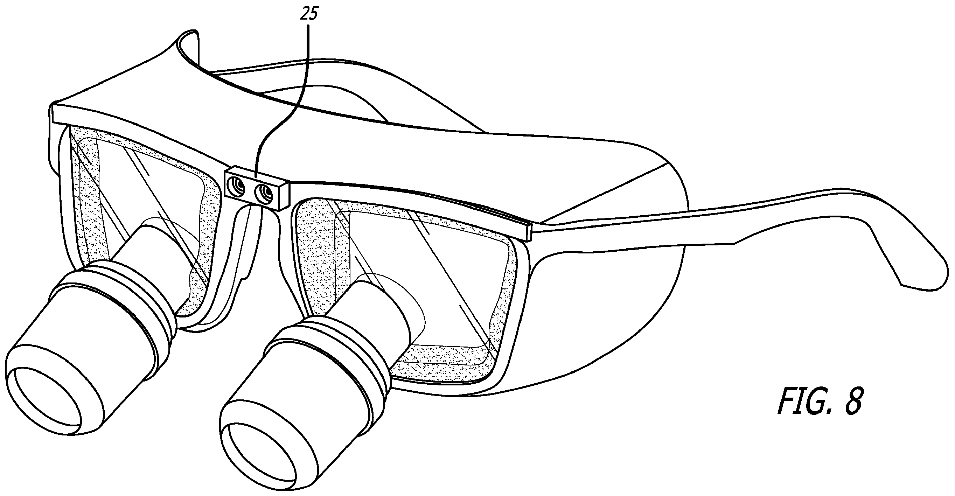

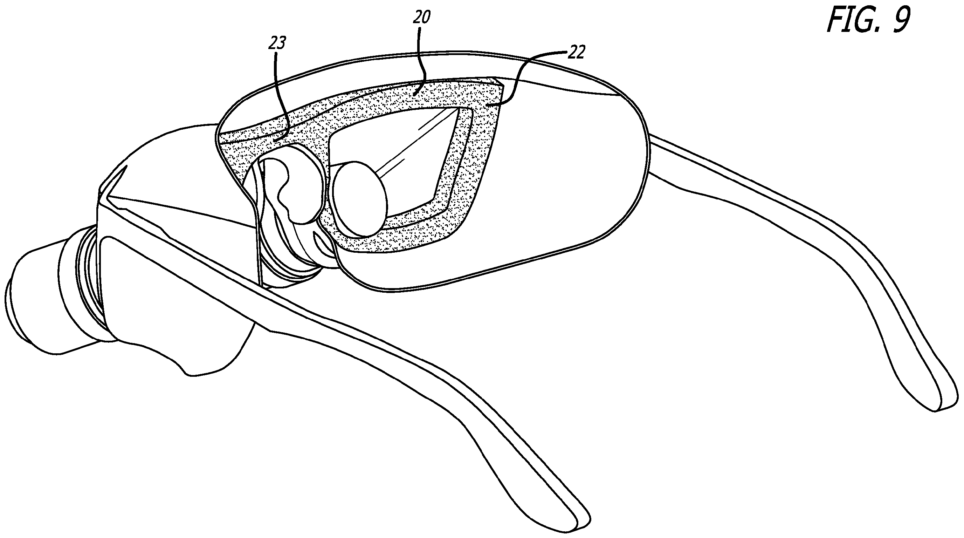

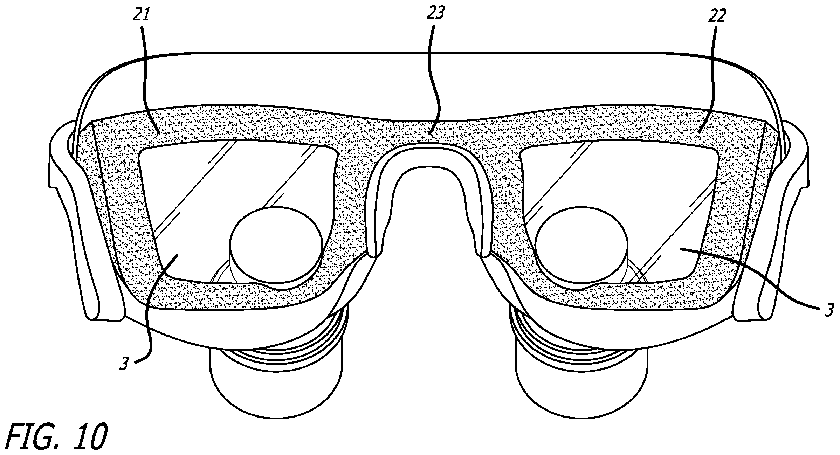

Referring to Figures 8-11, there is shown the loupe assembly 1 further comprising a humidity sponge 20 removably disposed on one or both of the pair of transparencies 3. The humidity sponge 20 comprises a desiccant and, as shown in the embodiment of Figures 8-11, extends around a circumference of one or both of the pair of transparencies 3. In other embodiments, the humidity sponge can have a different shape and be removably disposed on one or both of the pair of transparencies 3 at locations other than around the circumferences of the pair of transparencies. In a specific embodiment, the desiccant is silica. The humidity sponge 20 can be medical-grade synthetic sponge or made of cellulose or another natural material. The humidity sponge 20 has an adhesive placed on one side so that the humidity sponge 20 can be removably adhered to the pair of transparencies 3.

As shown in Figures 8-10, the humidity sponge 20 comprises a first transparency portion 21 removably disposed on one of the pair of transparencies 3 and a second transparency portion 22 removably disposed on the other one of the pair of transparencies 3. The humidity sponge 20 further comprises a bridge portion 23 connecting the first transparency portion 21 and the second transparency portion 22. In other embodiments, the first transparency portion 21 and the second transparency portion 22 can be separate.

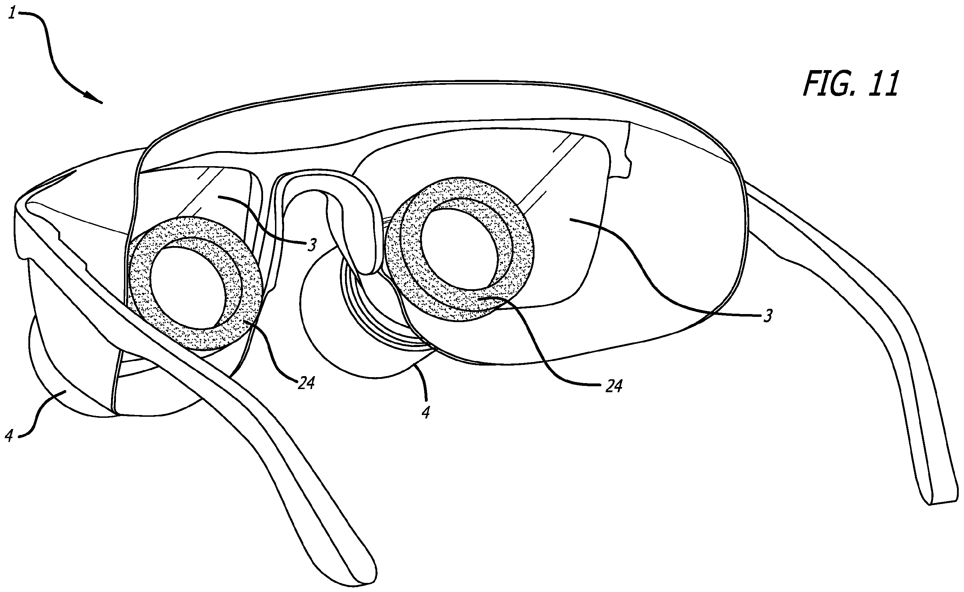

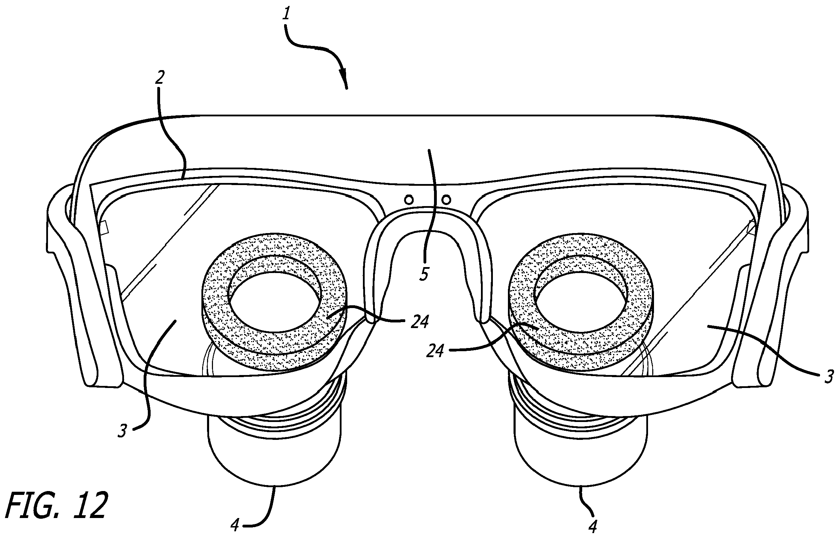

Referring to Figures 11 and 12, there is shown the loupe assembly 1 further comprising a pair of humidity sponges 24 removably disposed around the pair of magnification lenses 4. The humidity sponges 24 are configured as a pair of circular sponges, each extending around a circumference of one the pair of magnification lenses 4. As shown in Figures 11 and 12, the pair of humidity sponges 24 are disposed on a portion of the pair of transparencies 3 surrounding the pair of magnification lenses 4. In other embodiments, the pair of humidity sponges 24 can be disposed on a housing of the pair of magnification lenses 4. In a further embodiment, only one humidity sponge 24 is disposed on or around one of the pair of magnification lenses 4.

In one embodiment, the loupe assembly 1 further comprises a headlamp mount 25 coupled to the eyewear frame 2. The eye shield 5 has an aperture. The headlamp mount 25 extends through the aperture in the eye shield 5.

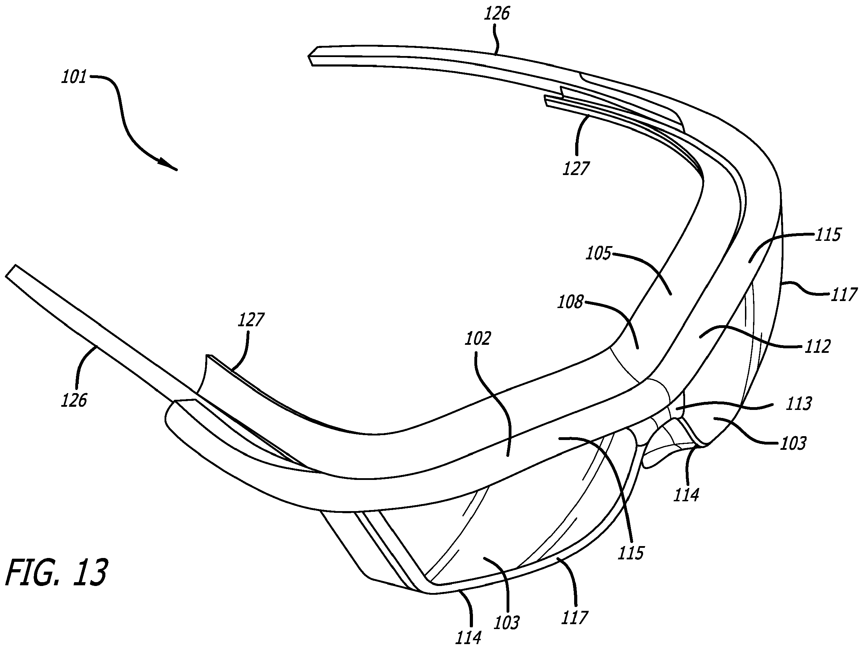

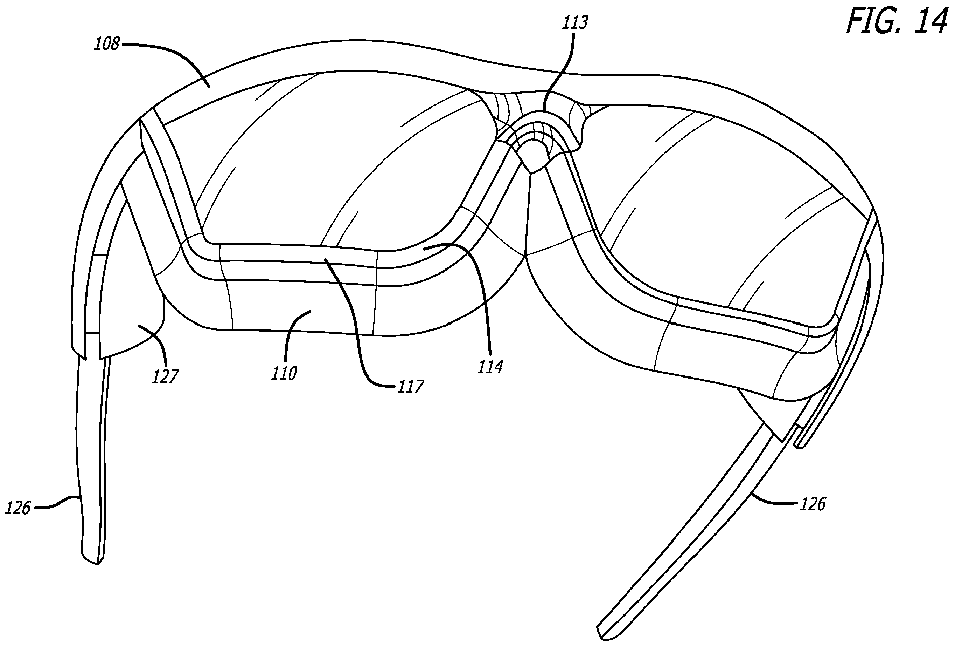

Referring to Figures 13 and 14, there is shown an embodiment of a loupe assembly 101 comprising an eyewear frame 102, a pair of transparencies 103 disposed within the eyewear frame 102, and an eye shield 105 coupled to the eyewear frame 102. The eyewear frame 102 has a front portion 112 comprising a bridge 113 and a pair of rims 114 coupled to the bridge. The eye shield 105 surrounds the front portion 112 of the eyewear frame 102.

The loupe assembly 101 further comprises a pair of temple arms 126. Each of the pair of temple arms 126 extends from one of the pair of rims 114.

The eye shield 105 comprises a top shield 108 and a bottom shield 110. The top shield 108 is coupled to the bridge 113 and to an upper portion 115 of the pair of rims 114. The bottom shield 110 extends from one side of the top shield 108, around a lower portion 117 of the pair of rims 114, and to an opposite side of the top shield 108.

The top shield 108 comprises a pair of extensions 127. Each of the pair of extensions 127 extends along a portion of one of the pair of temple arms 126.

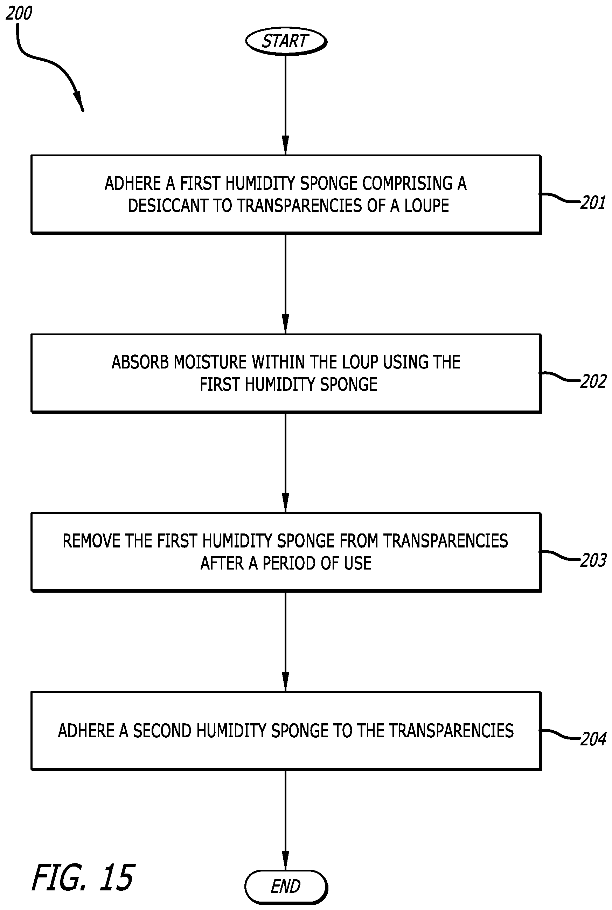

Referring to Figure 15, there is shown a method 200 of absorbing moisture within a loupe assembly, the loupe assembly comprising an eyewear frame, a pair of transparencies disposed within the eyewear frame, a pair of magnification lenses, and an eye shield coupled to the eyewear frame. The method 200 comprises a step 201 of adhering a first humidity sponge comprising a desiccant to one or both of the pair of transparencies, a step 202 of absorbing moisture within the loupe assembly using the first humidity sponge while the loupe assembly is being worn, a step 203 of removing the first humidity sponge from the pair of transparencies after a period of use, and a step 204 of adhering a second humidity sponge to one or both of the pair of transparencies.

The term "coupled" refers to direct or indirect connecting, contacting, fastening, joining, or linking, and may refer to various forms of coupling, such as physical, chemical, magnetic, mechanical, or other coupling, or a combination of the foregoing. Where one form of coupling is specified, this does not imply that other forms of coupling are excluded.

While various embodiments of the disclosed technology have been described above, it should be understood that the embodiments have been presented by way of example only, and not of limitation. Likewise, the various drawings may depict example configurations for the disclosed technology, which is done to aid in understanding the features and functionality that can be included in the disclosed technology. The disclosed technology is not restricted to the illustrated example configurations, but the desired features can be implemented using a variety of alternative configurations.

## Claims

1. A loupe assembly comprising:
an eyewear frame;
a pair of transparencies disposed within the eyewear frame;
a pair of magnification lenses, each of the pair of magnification lenses associated with one of the pair of transparencies; and
an eye shield coupled to the eyewear frame.

2. The loupe assembly of claim 1, further comprising a humidity sponge removably disposed on one or both of the pair of transparencies.

3. The loupe assembly of claim 2, wherein the humidity sponge comprises a desiccant.

4. The loupe assembly of claim 2, wherein the humidity sponge extends around a circumference of one or both of the pair of transparencies.

5. The loupe assembly of claim 2, wherein the humidity sponge extends around a circumference of both of the pair of transparencies.

6. The loupe assembly of claim 2, wherein the humidity sponge comprises:
a first transparency portion removably disposed on one of the pair of transparencies; and
a second transparency portion removably disposed on the other one of the pair of transparencies; and
wherein the humidity sponge preferably further comprises a bridge portion connecting the first transparency portion and the second transparency portion.

7. The loupe assembly of claim 1, wherein:
the eye shield has a front edge and a rear edge;
the eye shield is coupled to the eyewear frame at the front edge; and
the rear edge is contoured to seal against a wearer's face.

8. The loupe assembly of claim 1, wherein the eye shield comprises:
a top shield;
a pair of side shields extending downwardly from the top shield;
a pair of bottom shields, each of the pair of bottom shields extending inwardly from one of the pair of side shields; and
a nose shield connecting the pair of bottom shields.

9. The loupe assembly of claim 8, wherein:
the eyewear frame further comprises a pair of rims and a pair of temple arms, each of the pair of temple arms extending from one of the pair of rims; and
the top shield comprises a pair of extensions, each of the pair of extensions extending along a portion of one of the pair of temple arms.

10. The loupe assembly of claim 1, wherein:
the eyewear frame has a front portion comprising
a bridge, and
a pair of rims coupled to the bridge; and
the eye shield surrounds the front portion of the eyewear frame.

11. The loupe assembly of claim 10, wherein the eye shield comprises:
a top shield coupled to the bridge and to an upper portion of the pair of rims;
a pair of side shields coupled to outer side portions of the pair of rims;
a pair of bottom shields coupled to lower portions of the pair of rims; and
a nose shield coupled to inner side portions of the pair of rims.

12. The loupe assembly of claim 10, wherein the eye shield comprises:
a top shield coupled to the bridge and to an upper portion of the pair of rims; and
a bottom shield that extends from one side of the top shield, around a lower portion of the pair of rims, and to an opposite side of the top shield.

13. The loupe assembly of claim 12, wherein:
the eyewear frame further comprises a pair of temple arms, each of the pair of temple arms extending from one of the pair of rims; and
the top shield comprises a pair of extensions, each of the pair of extensions extending along a portion of one of the pair of temple arms.

14. The loupe assembly of claim 1, further comprising a headlamp mount coupled to
the eyewear frame;
wherein the eye shield has an aperture; and
wherein the headlamp mount extends through the aperture in the eye shield.

15. A method of absorbing moisture within a loupe assembly, the loupe assembly comprising an eyewear frame, a pair of transparencies disposed within the eyewear frame, a pair of magnification lenses, and an eye shield coupled to the eyewear frame, the method comprising:
adhering a first humidity sponge to one or both of the pair of transparencies, the first humidity sponge comprising a desiccant;
absorbing moisture within the loupe assembly using the first humidity sponge while the loupe assembly is being worn;
removing the first humidity sponge from the pair of transparencies after a period of use; and
adhering a second humidity sponge to one or both of the pair of transparencies.
